# EUROPÄISCHE PATENTSCHRIFT

(11) **EP 3 326 021 B1**
(45) Veröffentlichungstag und Bekanntmachung des Hinweises auf die Patenterteilung: **27.01.2021**
(21) Anmeldenummer: 16748074.8
(22) Anmeldetag: 19.07.2016
(51) Int. Cl.: G02B 26/10

(54) **ANORDNUNG UND VERFAHREN ZUR ZWEIDIMENSIONALEN ABLENKUNG OPTISCHER STRAHLUNG**
ARRANGEMENT AND METHOD FOR TWO-DIMENSIONAL DEFLECTION OF OPTICAL RADIATION
AGENCEMENT ET PROCÉDÉ POUR LA DÉVIATION BIDIMENSIONNELLE DE RAYONNEMENT OPTIQUE

(30) Priorität: 23.07.2015 DE 102015213897
(43) Veröffentlichungstag der Anmeldung: 30.05.2018
(73) Patentinhaber: Fraunhofer Gesellschaft zur Förderung der angewandten Forschung E.V., 80686 München (DE)
(72) Erfinder: BÜSING, Lasse, 56070 Koblenz-Bubenheim (DE); STOLLENWERK, Jochen, 6291 AV Vaals (NL)
(74) Vertreter: Gagel, Roland
(86) Internationale Anmeldenummer: PCT/EP2016/067123
(87) Internationale Veröffentlichungsnummer: WO 2017/013091

(56) Entgegenhaltungen:
- DE-B3-102014 200 633
- US-A- 5 067 782
- US-A- 5 381 224

## Beschreibung

### Technisches Anwendungsgebiet

Die vorliegende Erfindung betrifft eine Anordnung und ein Verfahren zur zweidimensionalen dynamischen Ablenkung optischer Strahlung, insbesondere von Laserstrahlung, mit einem ersten Strahlablenkelement, das um eine erste Rotationsachse drehbar antreibbar ist, und einem zweiten Strahlablenkelement, das um eine zweite Rotationsachse drehbar antreibbar ist.

Zur Effizienzsteigerung bei laserbasierten Verfahren in der Materialbearbeitung sind Methoden zur schnellen Verteilung der Energie auf dem Werkstück erforderlich. Eine vielversprechende Alternative zu schnellen Strahlablenksystemen stellt die Bearbeitung mit ausgedehnten Intensitätsverteilungen dar. Dies können zum Beispiel rechteckförmige Verteilungen, Linienprofile, komplexere Verteilungen wie zum Beispiel Logos oder auch Anordnungen aus mehreren Laserspots sein. Zur Erzeugung derartiger räumlich ausgedehnter Intensitätsverteilungen wird der einfallende Laserstrahl mit Strahlformungselementen wie zum Beispiel diffraktiven optischen Elementen (DOE), Freiformoptiken, asphärischen optischen Elementen, Mikrolinsenarrays, Facettenspiegeln oder deformierbaren Spiegeln so geformt, dass sich durch die Abbildung mit einer Fokussieroptik die entsprechende Intensitätsverteilung auf dem Werkstück einstellt. Dies bedeutet, dass der einfallende Strahl durch das Strahlformungselement in einen Strahl mit einer kontinuierlichen oder diskreten Winkelverteilung seiner Strahlanteile aufgespalten wird. Mit Hilfe von Strahlablenksystemen, wie beispielsweise Galvoscannern, werden die unter verschiedenen Winkeln einfallenden Strahlanteile dann über das Werkstück geführt.

Die Verwendung von Strahlablenksystemen bei Strahlung, die unter verschiedenen Winkeln eingekoppelt wird, führt bereits bei Ablenkwinkeln von wenigen Grad zu signifikanten Verzerrungen der Intensitätsverteilung. Die Form der Intensitätsverteilung ändert sich dabei als Funktion des Ablenkwinkels. Im Falle eines Arrays aus einzelnen diskreten Laserspots ändert sich die Form des Arrays, also die Positionierung der Spots zueinander. Insbesondere bei der Mikrostrukturierung, die ein großes Einsatzgebiet von Ultrakurzpuls-Strahlquellen darstellt, wie sie auch mit der vorgeschlagenen Anordnung und dem vorgeschlagenen Verfahren eingesetzt werden können, ist die räumliche Position der einzelnen Laserspots essentiell für das Bearbeitungsergebnis. Somit ist für den effizienten Einsatz von Strahlablenksystemen in Kombination mit Multistrahloptiken und ausgedehnten Intensitätsverteilungen eine Kompensation der winkelabhängigen Verzeichnung erforderlich.

### Stand der Technik

Zur Minimierung der Fehler bei derzeitigen Anwendungen in der Lasermaterialbearbeitung ist es beispielsweise aus L. Büsing et al., "Design, alignment and applications of optical systems for parallel processing with ultra-short laser pulses", Proc. of SPIE, Vol. 9131 (2014), Seiten 91310C-1 bis 91310C-12 bekannt, die Ablenkwinkel entsprechend einzuschränken. Alternativ können die auftretenden Positionsfehler auch durch aktive Kompensationselemente kompensiert werden. Dieses Vorgehen erfordert jedoch eine große Anzahl an Aktuatoren, die mit dem Ablenksystem zu synchronisieren sind.

Aus der US 5,067,782 ist eine Anordnung zur verzeichnungsfreien zweidimensionalen Ablenkung eines einzelnen Laserstrahls bekannt, bei dem zwei Polygonspiegel als Strahlablenkelemente eingesetzt werden, die um senkrecht zueinander stehende Rotationsachsen drehbar sind. Der durch das erste Strahlablenkelement abgelenkte Laserstrahl wird dabei über eine Zylinderlinse auf das zweite Strahlablenkelement gerichtet, wobei die Zylinderachse der Zylinderlinse senkrecht zur Rotationsachse des zweiten Strahlablenkelementes ausgerichtet ist. Der durch das zweite Strahlablenkelement abgelenkte Strahl wird dann über eine weitere Zylinderlinse mit einer parallel zur Rotationsachse des zweiten Strahlablenkelementes ausgerichteten Zylinderachse auf eine Zielebene fokussiert. Mit dieser Anordnung lassen sich jedoch keine räumlich ausgedehnten Intensitätsverteilungen verzeichnungsfrei ablenken.

Eine scannendes Laserabbildungssystem ist aus der Druckschrift US 5,381,224 bekannt.

Die Aufgabe der vorliegenden Erfindung besteht darin, eine Anordnung sowie ein Verfahren zur zweidimensionalen Ablenkung von räumlich ausgedehnten Intensitätsverteilungen anzugeben, mit denen die Intensitätsverteilungen verzeichnungsfrei abgelenkt und auf eine Zielebene abgebildet werden können.

### Darstellung der Erfindung

Die Aufgabe wird mit der Anordnung und dem Verfahren gemäß den Patentansprüchen 1 und 6 gelöst. Vorteilhafte Ausgestaltungen der Anordnung sowie des Verfahrens sind Gegenstand der abhängigen Patentansprüche oder lassen sich der nachfolgenden Beschreibung sowie den Ausführungsbeispielen entnehmen.

Die vorgeschlagene Anordnung weist zwei Strahlablenkelemente auf. Ein erstes Strahlablenkelement ist um eine erste Rotationsachse drehbar antreibbar, ein zweites Strahlablenkelement um eine zweite Rotationsachse. Die beiden Rotationsachsen stehen dabei zueinander senkrecht. Mit einer ersten optischen Anordnung wird eintretende Strahlung auf das erste Strahlablenkelement abgebildet, mit einer zweiten optischen Anordnung über das erste Strahlablenkelement auf das zweite Strahlablenkelement. Die beiden optischen Anordnungen sind dabei so ausgelegt, dass sie eine gemeinsame Eintrittspupille für die Strahlung aufweisen und die Strahlanteile der eintretenden Strahlung, die unter unterschiedlichen Winkeln durch das Zentrum der Eintrittspupille treten oder sich vom Zentrum der Eintrittspupille unter unterschiedlichen Winkeln ausbreiten, jeweils senkrecht zur ersten Rotationsachse auf das erste Ablenkelement und senkrecht zur zweiten Rotationsachse auf das zweite Ablenkelement treffen.

Das aus den beiden optischen Anordnungen gebildete optische System der vorliegenden Anordnung wird damit so ausgelegt, dass die Rotationsachsen der Strahlablenkelemente jeweils von allen Strahlanteilen mit ρₓ = ρ_{y} = 0 unabhängig von deren Feldwinkel εₓ, ε_{y} senkrecht getroffen werden. Dabei beschreiben ρₓ und ρ_{y} die Koordinaten des Durchstoßungspunktes des Strahls in der Eintrittspupille. Die Bedingung ρₓ = ρ_{y} = 0 bedeutet, dass die Eintrittspupille des optischen Systems mittig getroffen wird. Unter der Eintrittspupille wird hierbei die reelle oder virtuelle Öffnung verstanden, welche die in das optische System bzw. die beiden optischen Anordnungen einfallenden Strahlenbündel begrenzt.

Durch die beschriebene Auslegung der vorgeschlagenen Anordnung wird erreicht, dass in die Anordnung eintretende Strahlung mit einer im Winkelraum ausgedehnten Intensitätsverteilung durch die beiden Strahlablenkelemente verzeichnungsfrei zweidimensional abgelenkt und zu einer räumlich ausgedehnten zweidimensionalen Intensitätsverteilung auf eine Zielebene fokussiert bzw. projiziert werden kann. Das Verfahren und die Anordnung ermöglichen dabei die Kompensation scanwinkelabhängiger Verzeichnung. Nur durch die Kompensation dieser Fehler lassen sich Ablenksysteme in vollem Umfang bei Multistrahlapplikationen und Anwendungen mit ausgedehnten Intensitätsverteilungen einsetzen. Im Multistrahlbereich wird dadurch die Realisierung größerer Laserspotabstände und/oder Arrays mit einer größeren Anzahl an Laserspots ermöglicht. Die Produktivität einer Bearbeitungsanlage kann somit signifikant gesteigert werden. Die Anordnung und das Verfahren lassen sich dabei besonders vorteilhaft in der Materialbearbeitung einsetzen. Es bestehen jedoch auch Anwendungsmöglichkeiten bei der Strahlformung und -führung für andere Einsatzzwecke.

Im Bereich der optischen Strahlung, insbesondere der Laserstrahlung, werden vorzugsweise Spiegel als Strahlablenkelemente eingesetzt.

Vorzugsweise wird die räumlich ausgedehnte Intensitätsverteilung der Strahlung mit einem geeigneten Strahlformungselement erzeugt, wie es in der Beschreibungseinleitung bereits kurz erläutert wurde. Beispiele für Strahlformungselemente, mit denen ein einfallender Strahl in eine kontinuierliche oder diskrete Winkelverteilung aufgespalten werden kann, sind diffraktive optische Elemente, Spatial Light Modulatoren, Freiformoptiken, asphärische optische Elemente, Facettenspiegel, Mikrolinsenarrays oder deformierbare Spiegel. In einer vorteilhaften Ausgestaltung umfasst die vorgeschlagene Anordnung hierzu ein diffraktives optisches Element, das in der Eintrittspupille der optischen Anordnungen positioniert ist. Der eintreffende Strahl wird dabei im Zentrum der Eintrittspupille auf dieses diffraktive optische Element gerichtet und in die räumlich ausgedehnte zweidimensionale Intensitätsverteilung aufgespalten. Anstelle des diffraktiven optischen Elementes kann selbstverständlich ein anderes geeignetes Strahlformungselement in der Eintrittspupille angeordnet sein. Im Falle eines Mikrolinsenarrays muss dieses beispielsweise mit einer zusätzlichen Optik versehen werden, welche die durch das Mikrolinsenarray erzeugten Teilstrahlen unter unterschiedlichen Winkeln durch das Zentrum der Eintrittspupille richtet. Zusätzliche optische Elemente sind evtl. auch bei Nutzung anderer Strahlformungselemente erforderlich, um eine ortsabhängige Intensitätsverteilung I(x,y) in eine winkelabhängige Intensitätsverteilung I(εx, εy) zu überführen und/oder eine zusätzliche Strahlformung durchzuführen.

In der bevorzugten Ausgestaltung werden die beiden optischen Anordnungen durch zwei gegeneinander um 90° bezüglich der optischen Achse gedrehten, zylindrischen Relay-Teleskope realisiert, jeweils mit nachgeschalteter Zylinderoptik zur Fokussierung auf die gemeinsame Zielebene. Durch die Relay-Teleskope wird die Eintrittspupille auf das jeweilige Strahlumlenkelement abgebildet. Die Zylinderachsen der zylindrischen Relay-Teleskope und nachgeschalteten Zylinderoptiken der jeweiligen optischen Anordnung müssen dabei parallel zur Rotationsachse des Strahlumlenkelementes ausgerichtet sein, auf das die Abbildung der Eintrittspupille erfolgt.

Da die beiden Strahlumlenkelemente räumlich versetzt positioniert sind, müssen die beiden Relay-Teleskope mit unterschiedlichen Brennweiten ausgelegt werden. Nur so kann gewährleistet werden, dass die Eintrittspupille durch die jeweilige optische Anordnung auf das entsprechende Strahlumlenkelement abgebildet wird.

Die den Relay-Teleskopen nachgeschalteten Zylinderoptiken fokussieren die durch die beiden Strahlablenkelemente umgelenkte Strahlung auf die Zielebene, beispielsweise eine Werkstückoberfläche im Falle der Materialbearbeitung. Die zur ersten optischen Anordnung gehörige Zylinderoptik ist dabei vor dem zweiten Strahlumlenkelement angeordnet und trägt dazu bei, die einzelnen Strahlanteile senkrecht zur Rotationsachse auf das zweite Strahlumlenkelement zur richten. Die zur zweiten optischen Anordnung gehörige Zylinderoptik ist zwischen dem zweiten Strahlumlenkelement und der Zielebene angeordnet. Die Fokussierung erfolgt dabei also jeweils mit zylindrischen Linsen bzw. Linsensystemen für die beiden Strahlablenkrichtungen (x, y) getrennt. Vorzugsweise werden hierzu zwei zylindrische f-Theta-Linsen eingesetzt, deren Zylinderachsen dann senkrecht zueinander angeordnet sind. Falls in den beiden Ablenkrichtungen identische Abbildungsmaßstäbe gefordert werden, kann als Zylinderoptik für die erste Ablenkrichtung, die durch das erste Strahlumlenkelement erzeugt wird, eine Retrofokusanordnung und/oder als Zylinderoptik für die zweite Ablenkrichtung eine Telefokusanordnung eingesetzt werden. Diese beiden Anordnungen werden dann so ausgelegt, dass sie in ihren Brennweiten übereinstimmen.

Als Strahlumlenkelemente werden bei der vorgeschlagenen Anordnung vorzugsweise drehbare Spiegel eingesetzt, wie sie von Galvoscannern bekannt sind. Die Anordnung und das zugehörige Verfahren können jedoch beispielsweise auch mit Polygonspiegeln realisiert bzw. durchgeführt werden.

### Kurze Beschreibung der Zeichnungen

Die vorgeschlagene Anordnung und das zugehörige Verfahren werden nachfolgend anhand von Ausführungsbeispielen in Verbindung mit den Zeichnungen nochmals näher erläutert. Hierbei zeigen:
- Figur 1: eine schematische Darstellung einer Ausgestaltung der vorgeschlagenen Anordnung in der y-z-Ebene;
- Figur 2: eine schematische Darstellung der Anordnung der Figur 1 in der x-z-Ebene; und
- Figur 3: ein Beispiel für die Nutzung eines Mikrolinsenarrays zur Strahlaufspaltung.

### Wege zur Ausführung der Erfindung

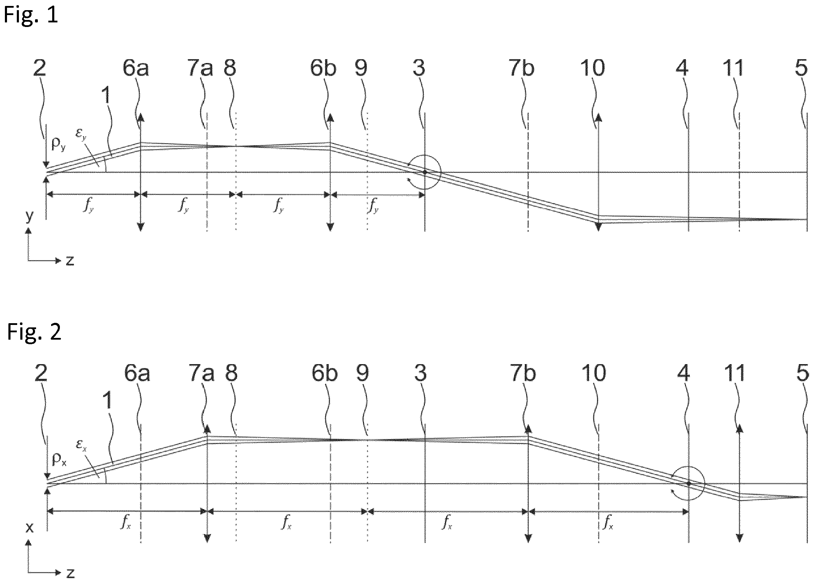

In den Figuren 1 und 2 ist eine beispielshafte Ausgestaltung der vorgeschlagenen Anordnung schematisch in zwei unterschiedlichen Ebenen dargestellt. Mit der optischen Anordnung soll eintreffende Laserstrahlung, die eine im Winkelraum ausgedehnte Intensitätsverteilung aufweist, über zwei drehbare Ablenkspiegel 3, 4 zweidimensional in x- und y-Richtung abgelenkt werden. Die Figuren 1 und 2 zeigen hierzu eine schematische Darstellung der Anordnung in der y-z-Ebene (Figur 1) und in der x-z-Ebene (Figur 2). Die einzelnen Elemente der Anordnung sind hierbei nur schematisch als Linien dargestellt, die eingesetzten Ablenkspiegel aus Gründen der Übersichtlichkeit nur als Position.

Das optische System der vorgeschlagenen Anordnung ist dabei so ausgelegt, dass die Rotationsachsen der beiden Ablenkspiegel 3, 4 jeweils von allen Strahlen, die durch das Zentrum der Eintrittspupille (ρₓ = ρ_{y} = 0) propagieren, unabhängig von deren Feldwinkel εₓ, ε_{y} senkrecht getroffen werden. ρₓ und ρ_{y} beschreiben dabei die Koordinaten des Durchstoßungspunktes des Strahls in der Eintrittspupille 2. In den Figuren 1 und 2 ist hierbei aus Gründen der Übersichtlichkeit lediglich ein beispielhafter Teilstrahl 1 angedeutet, der unter einem Winkel εₓ, ε_{y} zur optischen Achse mit seiner Strahlachse durch das Zentrum der Eintrittspupille 2 tritt. Hierbei wird unter einem Teilstrahl die Strahlung verstanden, die die Eintrittspupille 2 unter einem bestimmten Winkel ε durchläuft. Ein Teilstrahl hat somit im Bereich der Eintrittspupille 2 eine räumliche Ausdehnung und z. B. ein gaußsches Strahlprofil. Jeder Teilstrahl liefert einen Spot auf der Zielebene. Von dem Begriff Teilstrahl zu unterscheiden sind die Begriffe Hauptstrahl und Randstrahl aus der geometrischen Optik, bei denen es sich jeweils um eine Gerade ohne laterale Ausdehnung handelt. In den Fig. 1 bis 3 sind die Teilstrahlen 1, 14 jeweils durch einen Hauptstrahl und zwei Randstrahlen dargestellt. Der Hauptstrahl entspricht der Strahlachse des Teilstrahls und durchläuft die Eintrittspupille im Punkt ρₓ = ρ_{y} = 0. Die Randstrahlen durchlaufen die Eintrittspupille am Rand.

Im vorliegenden Beispiel wird das senkrechte Auftreffen auf die Rotationsachsen der Ablenkspiegel 3, 4 mit Hilfe zweier gegeneinander um 90° bezüglich der optischen Achse gedrehten, zylindrischen Relay-Teleskope realisiert, die die gemeinsame Eintrittspupille 2 aufweisen und diese auf den jeweiligen Ablenkspiegel 3, 4 abbilden.

Figur 1 zeigt hierbei den Strahlengang des Teilstrahls 1 durch eine erste Zylinderlinse 6a und eine zweite Zylinderlinse 6b, durch die die Eintrittspupille 2 auf den ersten Ablenkspiegel 3 abgebildet wird. Die Zylinderachsen der beiden Zylinderlinsen 6a, 6b verlaufen dabei parallel zu der Rotationsachse des ersten Ablenkspiegels 3. Die Drehung dieses Ablenkspiegels 3 ist durch den gekrümmten Pfeil in Figur 1 angedeutet. Die beiden Zylinderlinsen 6a, 6b sind so gewählt, dass sie einen Zwischenfokus 8 erzeugen, wie dies ebenfalls aus Figur 1 ersichtlich ist. Über eine weitere Zylinderlinse 10 mit der gleichen Orientierung der Zylinderachse wird der Teilstrahl 1 auf die Zielebene 5 fokussiert. Diese weitere Zylinderlinse 10 trägt auch dazu bei, dass die vom ersten Ablenkspiegel abgelenkten Teilstrahlen senkrecht zur Rotationsachse des zweiten Ablenkspiegels 4 auf diesen treffen.

Figur 2 zeigt den Verlauf des Teilstrahls 1 in der x-z-Ebene. In dieser Ebene wird der Teilstrahl 1 durch die zweite optische Anordnung mit einer ersten Zylinderlinse 7a und einer zweiten Zylinderlinse 7b auf den zweiten Ablenkspiegel 4 abgebildet, wie dies in Figur 2 angedeutet ist. Auch hier wird wiederum ein Zwischenfokus 9 zwischen den beiden Zylinderlinsen 7a, 7b gebildet. Die Rotation des zweiten Ablenkspiegels 4 ist wiederum durch einen gekrümmten Pfeil angedeutet. Dessen Rotationsachse steht somit senkrecht zur x-z-Ebene. Die Zylinderachsen der beiden Zylinderlinsen 7a, 7b verlaufen wiederum parallel zu dieser Rotationsachse.

Da die beiden Ablenkspiegel 3, 4 räumlich versetzt stehen, müssen die beiden Relay-Teleskope 6a, 6b und 7a, 7b mit unterschiedlichen Brennweiten fₓ, f_{y} ausgelegt werden. Nur so kann gewährleistet werden, dass die Eintrittspupille 2 in der y-z-Ebene auf den Ablenkspiegel 3 abgebildet wird und in der x-z-Ebene auf den Ablenkspiegel 4. Zwischen den Relaylinsen 6a, 6b bzw. 7a, 7b verlaufen die Strahlen jeweils telezentrisch. Dies ist für das zweite Relay-Teleskop 7a, 7b in jedem Falle erforderlich, für das erste Relay-Teleskop 6a, 6b nur optional. Die Fokussierung erfolgt in x- und in y-Richtung separat durch die Zylinderlinsen 10, 11, die vorzugsweise als zylindrische f-Theta-Linsen ausgebildet sind.

Falls in x- und in y-Richtung identische Abbildungsmaßstäbe gefordert werden, kann dies realisiert werden, indem anstelle der zylindrischen Fokussierlinse 10 ein zylindrisches Linsensystem in Retrofokusanordnung und/oder anstelle der zylindrischen Fokussierlinse 11 ein zylindrisches Linsensystem als Telefokusanordnung eingesetzt und die beiden Linsensysteme jeweils so ausgelegt werden, dass sie in ihren Brennweiten übereinstimmen.

Für die Erzeugung einer entsprechenden Winkelverteilung eines eintreffenden Laserstrahls bzw. eines räumlich ausgedehnten Intensitätsprofils in der Zielebene wird vorzugsweise ein diffraktives optisches Element in der Ebene der Eintrittspupille 2 angeordnet. Durch dieses diffraktive optische Element erfolgt dann die Aufspaltung der eintreffenden Laserstrahlung in die unterschiedlichen Feldwinkel.

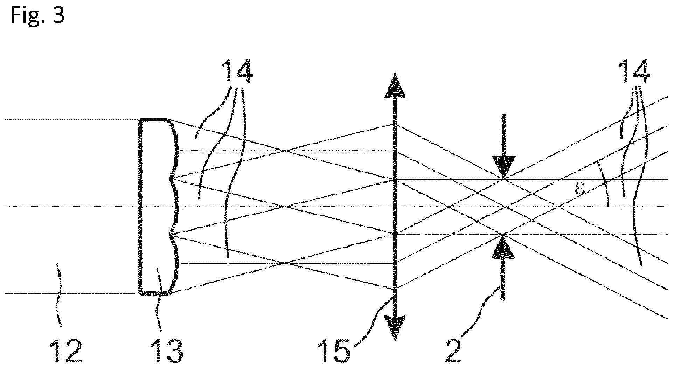

Figur 3 zeigt ein Beispiel für eine Strahlformungsanordnung zur Erzeugung einer entsprechenden Winkelverteilung mit Hilfe eines Mikrolinsenarrays 13. Für die Benutzung der vorgeschlagenen Anordnung bzw. des zugehörigen Verfahrens muss dann sichergestellt werden, dass die einzelnen Teilstrahlen unter unterschiedlichen Winkeln durch das Zentrum der Eintrittspupille 2 verlaufen. Dies kann durch die in Figur 3 dargestellte Anordnung realisiert werden. Der auf das Mikrolinsenarray 13 auftreffende homogenisierte Laserstrahl 12 wird durch das Mikrolinsenarray 13 in räumlich separierte Teilstrahlen 14 aufgespalten, wie dies in der Figur 3 nur schematisch anhand von drei Teilstrahlen 14 veranschaulicht ist. Die Teilstrahlen 14 werden dann mit Hilfe einer Fokussierlinse 15 einerseits kollimiert und andererseits auf das Zentrum der Eintrittspupille 2 der vorgeschlagenen Anordnung gerichtet, wie dies in der Figur 3 dargestellt ist.

### Bezugszeichenliste

- 1: Teilstrahl
- 2: Eintrittspupille
- 3: erster Ablenkspiegel
- 4: zweiter Ablenkspiegel
- 5: Ziel- bzw. Bearbeitungsebene
- 6a/6b: zylindrische Linsen der ersten optischen Anordnung
- 7a/7b: zylindrische Linsen der zweiten optischen Anordnung
- 8: Zwischenfokus
- 9: Zwischenfokus
- 10: zylindrische Fokussierlinse der ersten optischen Anordnung
- 11: zylindrische Fokussierlinse der zweiten optischen Anordnung
- 12: homogener Strahl
- 13: Mikrolinsenarray
- 14: Teilstrahlen
- 15: Fokussierlinse

## Patentansprüche

1. Anordnung zur zweidimensionalen dynamischen Ablenkung optischer Strahlung, insbesondere von Laserstrahlung mit einer räumlich ausgedehnten Intensitätsverteilung, mit
- einem ersten Strahlablenkelement (3), das um eine erste Rotationsachse drehbar antreibbar ist,
- einem zweiten Strahlablenkelement (4), das um eine zweite Rotationsachse drehbar antreibbar ist, wobei die erste und die zweite Rotationsachse zueinander senkrecht stehen,
- einer ersten optischen Anordnung (6a, 6b, 10), mit der eintretende Strahlung auf das erste Strahlablenkelement (3) abgebildet wird, und
- einer zweiten optischen Anordnung (7a, 7b, 11), mit der die eintretende Strahlung über das erste Strahlablenkelement (3) auf das zweite Strahlablenkelement (4) abgebildet wird,
- wobei die beiden optischen Anordnungen (6a, 6b, 7a, 7b, 10, 11) so ausgebildet sind,
dass sie eine gemeinsame Eintrittspupille (2) für die Strahlung aufweisen, und
dass Strahlanteile der eintretenden Strahlung, die sich unter unterschiedlichen Winkeln von einem Zentrum der Eintrittspupille (2) ausbreiten, jeweils senkrecht zur ersten Rotationsachse auf das erste Strahlablenkelement (3) und senkrecht zur zweiten Rotationsachse auf das zweite Strahlablenkelement (4) treffen,
- wobei die beiden optischen Anordnungen (6a, 6b, 7a, 7b, 10, 11) zylindrische Relay-Teleskope (6a, 6b, 7a, 7b) aufweisen, die die gemeinsame Eintrittspupille (2) auf das jeweilige Strahlablenkelement (3, 4) abbilden, wobei die Zylinderachse des zylindrischen Relay-Teleskops (6a, 6b) der ersten optischen Anordnung (6a, 6b, 10) parallel zur ersten Rotationsachse und die Zylinderachse des zylindrischen Relay-Teleskops (7a, 7b) der zweiten optischen Anordnung (7a, 7b, 11) parallel zur zweiten Rotationsachse ausgerichtet ist, und
- wobei die beiden optischen Anordnungen (6a, 6b, 7a, 7b, 10, 11) zylindrische Fokussieroptiken (10, 11) aufweisen, mit denen die Strahlung nach Ablenkung durch die Strahlablenkelemente (3, 4) auf eine Zielebene (5) fokussiert wird, wobei eine erste der zylindrischen Fokussieroptiken (10) zwischen dem ersten (3) und dem zweiten Strahlumlenkelement (4) und eine zweite der zylindrischen Fokussieroptiken (11) zwischen dem zweiten Strahlablenkelement (4) und der Zielebene (5) angeordnet ist, die Zylinderachse der ersten zylindrischen Fokussieroptik (10) parallel zur ersten Rotationsachse und die Zylinderachse der zweiten zylindrischen Fokussieroptik (11) parallel zur zweiten Rotationsachse ausgerichtet ist.

2. Anordnung nach Anspruch 1,
**dadurch gekennzeichnet,**
**dass** die zylindrischen Fokussieroptiken (10, 11) jeweils durch eine zylindrische f-Theta-Linse gebildet sind.

3. Anordnung nach Anspruch 1,
**dadurch gekennzeichnet,**
**dass** die erste zylindrische Fokussieroptik (10) als Retrofokus-Anordnung und/oder die zweite zylindrische Fokussieroptik (11) als TelefokusAnordnung ausgeführt ist und die beiden zylindrischen Fokussieroptiken (10, 11) so ausgelegt sind, dass sie in ihren Brennweiten übereinstimmen.

4. Anordnung nach einem der Ansprüche 1 bis 3,
**dadurch gekennzeichnet,**
**dass** ein diffraktives optisches Element in einer Ebene der gemeinsamen Eintrittspupille (2) angeordnet ist.

5. Anordnung nach einem der Ansprüche 1 bis 3,
**dadurch gekennzeichnet,**
**dass** ein Element zur Strahlaufspaltung (13) in mehrere Teilstrahlen (14) mit einer dritten optischen Anordnung (15) vor der Eintrittspupille (2) angeordnet ist, wobei die dritte optische Anordnung (15) so ausgelegt ist, dass die Teilstrahlen (14) unter unterschiedlichen Winkeln durch das Zentrum der gemeinsamen Eintrittspupille (2) treten.

6. Verfahren zur zweidimensionalen dynamischen Ablenkung optischer Strahlung, insbesondere von Laserstrahlung mit einer räumlich ausgedehnten Intensitätsverteilung, bei dem
- die Strahlung mit einer ersten optischen Anordnung (6a, 6b, 10) auf ein erstes Strahlablenkelement (3) abgebildet wird, das um eine erste Rotationsachse drehbar ausgeführt ist,
- die Strahlung mit einer zweiten optischen Anordnung (7a, 7b, 11) über das erste Strahlablenkelement (3) auf ein zweites Strahlablenkelement (4) abgebildet wird, das um eine zweite Rotationsachse drehbar ausgeführt ist,
- wobei die erste und die zweite Rotationsachse zueinander senkrecht stehen,
- wobei das erste und das zweite Strahlablenkelement (3, 4) für eine dynamische Ablenkung der Strahlung zur Drehung um ihre Rotationsachsen angetrieben werden,
- wobei die beiden optischen Anordnungen (6a, 6b, 7a, 7b, 10, 11) so ausgelegt werden, dass sie eine gemeinsame Eintrittspupille (2) aufweisen und Strahlanteile der optischen Strahlung, die sich unter unterschiedlichen Winkeln von einem Zentrum der gemeinsamen Eintrittspupille (2) ausbreiten, jeweils senkrecht zur ersten Rotationsachse auf das erste Strahlablenkelement (3) und senkrecht zur zweiten Rotationsachse auf das zweite Strahlablenkelement (4) treffen,
- wobei die beiden optischen Anordnungen (6a, 6b, 7a, 7b, 10, 11) mit zylindrischen Relay-Teleskopen (6a, 6b, 7a, 7b) ausgestattet werden, die die gemeinsame Eintrittspupille (2) auf das jeweilige Strahlablenkelement (3, 4) abbilden, wobei die Zylinderachse des zylindrischen Relay-Teleskops (6a, 6b) der ersten optischen Anordnung (6a, 6b, 10) parallel zur ersten Rotationsachse und die Zylinderachse des zylindrischen Relay-Teleskops (7a, 7b) der zweiten optischen Anordnung (7a, 7b, 11) parallel zur zweiten Rotationsachse ausgerichtet wird, und
- wobei die Strahlung nach einer Ablenkung durch die Strahlablenkelemente (3, 4) mit zylindrischen Fokussieroptiken (10, 11) auf eine Zielebene (5) fokussiert wird, wobei eine erste der zylindrischen Fokussieroptiken (10) zwischen dem ersten (3) und dem zweiten Strahlumlenkelement (4) und eine zweite der zylindrischen Fokussieroptiken (11) zwischen dem zweiten Strahlablenkelement (4) und der Zielebene (5) angeordnet wird, und die Zylinderachse der ersten zylindrischen Fokussieroptik (10) parallel zur ersten Rotationsachse und die Zylinderachse der zweiten zylindrischen Fokussieroptik (11) parallel zur zweiten Rotationsachse ausgerichtet wird.

7. Verfahren nach Anspruch 6,
**dadurch gekennzeichnet,**
**dass** ein diffraktives optisches Element in einer Ebene der gemeinsamen Eintrittspupille (2) angeordnet wird und ein Einzelstrahl so auf das diffraktive optische Element gerichtet wird, dass er im Zentrum der Eintrittspupille (2) auf das diffraktive optische Element trifft.

8. Verfahren nach Anspruch 6 oder 7,
**dadurch gekennzeichnet,**
**dass** ein Einzelstrahl durch ein Element zur Strahlaufspaltung (13) in mehrere Teilstrahlen (14) aufgetrennt wird und die Teilstrahlen (14) so geführt werden, dass sie unter unterschiedlichen Winkeln durch das Zentrum der gemeinsamen Eintrittspupille (2) treten.

## Claims

1. Arrangement for two-dimensional dynamic deflection of optical radiation, particularly laser radiation, with a spatially extended intensity distribution, having
- a first beam deflection element (3), which is drivable in rotation about a first axis of rotation,
- a second beam deflection element (4), which is drivable in rotation about a second axis of rotation, wherein the first and the second axes of rotation are aligned perpendicularly to one another,
- a first optical arrangement (6a, 6b, 10), with which incoming radiation is projected onto the first beam deflection element (3), and
- a second optical arrangement (7a, 7b, 11), with which the incoming radiation is projected onto the second beam deflection element (4) via the first beam deflection element (3),
- wherein the two optical arrangements (6a, 6b, 7a, 7b, 10, 11) are constructed in such manner that they have a common entrance pupil (2) for the radiation, and that beam portions of the incident radiation, which propagate at different angles from a centre of the entrance pupil (2), are incident on the first beam deflection element (3) perpendicularly to the first axis of rotation, and incident on the second beam deflection element (4) perpendicularly to the second axis of rotation respectively,
- wherein the two optical arrangements (6a, 6b, 7a, 7b, 10, 11) are equipped with cylindrical relay telescopes (6a, 6b, 7a, 7b) which project the common entrance pupil (2) onto the respective beam deflection element (3, 4), wherein the cylinder axis of the cylindrical relay telescope (6a, 6b) of the first optical arrangement (6a, 6b, 10) is aligned parallel to the first axis of rotation, and the cylinder axis of the cylindrical relay telescope (7a, 7b) of the second optical arrangement (7a, 7b, 11) is aligned parallel to the second axis of rotation, and
- wherein the two optical arrangements (6a, 6b, 7a, 7b, 10, 11) have cylindrical focusing optics (10, 11), with which the radiation is focused on a target plane (5) after deflection by the beam deflecting elements (3, 4), wherein a first of the cylindrical focusing optics (10) is arranged between the first (3) and the second beam deflection element (4) and a second of the cylindrical focusing optics (11) is arranged between the second beam deflection element (4) and the target plane (5), the cylinder axis of the first cylindrical focusing optics (10) is aligned parallel to the first axis of rotation, and the cylinder axis of the second cylindrical focusing optics (11) is aligned parallel to the second axis of rotation.

2. Arrangement according to Claim 1,
**characterized in that**
the cylindrical focusing optics (10, 11) are each formed by a cylindrical f-theta lens.

3. Arrangement according to Claim 1,
**characterized in that**
the first cylindrical focusing optics (10) is designed as a retrofocus arrangement, and/or the second cylindrical focusing optics (11) is designed as a telephoto arrangement, and the two cylindrical focusing optics (10, 11) are designed such that their focal lengths coincide.

4. Arrangement according to any one of Claims 1 to 3,
**characterized in that**
a diffractive optical element is arranged in a plane of the common entrance pupil (2).

5. Arrangement according to any one of Claims 1 to 3,
**characterized in that**
an element for splitting a beam (13) into several partial beams (14) is arranged with a third optical arrangement (15) in front of the entrance pupil (2), wherein the third optical arrangement (15) is designed such that the partial beams (14) pass through the centre of the common entrance pupil (2) at different angles.

6. Method for two-dimensional dynamic deflection of optical radiation, particularly laser radiation, with a spatially extended intensity distribution, in which
- the radiation is projected onto a first beam deflection element (3) by a first optical arrangement (6a, 6b, 10), which element is designed to be rotatable about a first axis of rotation,
- the radiation is projected onto a second beam deflection element (4) via the first beam deflection element (3) by a second optical arrangement (7a, 7b, 11), which second element is designed to be rotatable about a second axis of rotation,
- wherein the first and the second axes of rotation are aligned perpendicularly to one another,
- wherein the first and the second beam deflection elements (3, 4) are driven to rotate about their axes of rotation for a dynamic deflection of the radiation,
- wherein the two optical arrangements (6a, 6b, 7a, 7b, 10, 11) are designed such that they have a have a common entrance pupil (2), and partial beams of the optical radiation which are propagated from a centre of the common entrance pupil (2) at different angles are incident perpendicularly to the first axis of rotation on the first beam deflection element (3) and perpendicularly to the second axis of rotation on the second beam deflection element (4) respectively,
- wherein the two optical arrangements (6a, 6b, 7a, 7b, 10, 11) are equipped with cylindrical relay telescopes (6a, 6b, 7a, 7b) which project the common entrance pupil (2) onto the respective beam deflection element (3, 4), wherein the cylinder axis of the cylindrical relay telescope (6a, 6b) of the first optical arrangement (6a, 6b, 10) is aligned parallel to the first axis of rotation, and the cylinder axis of the cylindrical relay telescope (7a, 7b) of the second optical arrangement (7a, 7b, 11) is aligned parallel to the second axis of rotation, and
- wherein after a deflection by the beam deflecting elements (3, 4) the radiation is focused on a target plane (5) by cylindrical focusing optics (10, 11), wherein a first of the cylindrical focusing optics (10) is arranged between the first (3) and the second beam deflection elements (4) and a second of the cylindrical focusing optics (11) is arranged between the second beam deflection element (4) and the target plane (5), and the cylinder axis of the first cylindrical focusing optics (10) is aligned parallel to the first axis of rotation and the cylinder axis of the second cylindrical focusing optics (11) is aligned parallel to the second axis of rotation.

7. Method according to Claim 6,
**characterized in that**
a diffractive optical element is arranged in a plane of the common entrance pupil (2) and a single beam is directed towards the diffractive optical element in such manner that it is incident on the diffractive optical element in the centre of the entrance pupil (2) .

8. Method according to one of Claims 6 or 7,
**characterized in that**
a single beam is split into several partial beams (14) by an element for beam splitting (13), and the partial beams (14) are guided in such a way that they pass through the centre of the common entrance pupil (2) at different angles.

## Revendications

1. Agencement pour une déviation dynamique bidimensionnelle d'un rayonnement optique, en particulier d'un rayonnement laser avec une distribution d'intensité étendue spatialement, comportant
- un premier élément de déviation de faisceau (3) qui peut être entraîné en rotation autour d'un premier axe de rotation,
- un deuxième élément de déviation de faisceau (4) qui peut être entraîné en rotation autour d'un deuxième axe de rotation, le premier et le deuxième axe de rotation étant perpendiculaires l'un à l'autre,
- un premier agencement optique (6a, 6b, 10), avec lequel un rayonnement entrant sur le premier élément de déviation de faisceau (3) est imagé, et
- un deuxième agencement optique (7a, 7b, 11), avec lequel le rayonnement entrant est imagé sur le deuxième élément de déviation de faisceau (4) via le premier élément de déviation de faisceau (3),
- dans lequel les deux agencements optiques (6a, 7a, 7b, 10, 11) sont conçus de manière à avoir une pupille d'entrée commune (2) pour le rayonnement, et les composantes de faisceau du rayonnement entrant qui se propagent à différents angles à partir d'un centre de la pupille d'entrée (2), dans chaque cas frappent l'élément de déviation du faisceau perpendiculairement au premier axe de rotation sur le premier élément de déviation de faisceau (3) et perpendiculairement au deuxième axe de rotation sur le deuxième élément de déviation de faisceau (4),
- dans lequel les deux agencements optiques (6a, 7a, 7b, 10, 11) ont des télescopes à relais cylindriques qui imagent la pupille d'entrée commune (2) sur l'élément de déviation de faisceau respectif (3, 4), dans lequel l'axe du cylindre du télescope à relais cylindrique (6a, 6b) du premier agencement optique (6a, 6b, 10) est aligné parallèlement au premier axe de rotation et l'axe du cylindre du télescope à relais cylindrique (7a, 7b) du deuxième agencement optique (7a, 7b, 11) est aligné parallèlement au deuxième axe de rotation, et
- dans lequel les deux agencements optiques (6a, 7a, 7b, 10, 11) ont des optiques de focalisation cylindriques (10, 11) avec lesquelles le rayonnement après la déviation par les éléments de déviation de faisceau (3, 4) est focalisé sur un plan cible (5), une première des optiques de focalisation cylindriques (10) est disposée entre le premier (3) et le deuxième élément de déviation de faisceau (4) et une deuxième des optiques de focalisation cylindriques (11) est disposée entre le deuxième élément de déviation de faisceau (4) et le plan cible (5), l'axe du cylindre de la première optique de focalisation cylindrique (10) est aligné parallèlement au premier axe de rotation et l'axe du cylindre de la deuxième optique de focalisation cylindrique (11) est aligné parallèlement au deuxième axe de rotation.

2. Agencement selon la revendication 1,
**caractérisé en ce que**
les optiques de focalisation cylindriques (10, 11) sont formées chacune par une lentille cylindrique f-thêta.

3. Agencement selon la revendication 1,
**caractérisé en ce que**
la première optique de focalisation cylindrique (10) est conçue comme un agencement de mise au point et/ou la deuxième optique de focalisation cylindrique (11) est conçue comme un agencement de téléfocalisation et les deux optiques de focalisation cylindriques (10, 11) sont conçues de manière à correspondre dans leurs distances focales.

4. Agencement selon une des revendications 1 à 3,
**caractérisé en ce qu'**
un élément optique diffractif est disposé dans un plan de la pupille d'entrée commune (2).

5. Dispositif selon une des revendications 1 à 3,
**caractérisé en ce qu'**
un élément de division du faisceau (13) en plusieurs faisceaux partiels (14) avec un troisième agencement optique (15) est disposé devant la pupille d'entrée (2), dans lequel le troisième agencement optique (15) est conçu de telle sorte que les rayonnements partiels (14) à différents angles passent à travers le centre de la pupille d'entrée commune (2).

6. Procédé de déviation dynamique bidimensionnelle d'un rayonnement optique, en particulier d'un rayonnement laser avec une distribution d'intensité étendue spatialement, dans lequel
- le rayonnement est imagé avec un premier agencement optique (6a, 6b, 10) sur un premier élément de déviation de faisceau (3) qui est conçu pour pouvoir tourner autour d'un premier axe de rotation,
- le rayonnement est imagé avec un deuxième agencement optique (7a, 7b, 11) via le premier élément de déviation de faisceau (3) sur un deuxième élément de déviation de faisceau (4) qui est conçu pour être rotatif autour d'un deuxième axe de rotation,
- dans lequel le premier et le deuxième axe de rotation sont perpendiculaires l'un à l'autre,
- dans lequel le premier et le deuxième élément de déviation de faisceau (3, 4) sont entraînés pour une déviation dynamique du rayonnement afin de tourner autour de leurs axes de rotation,
- dans lequel les deux agencements optiques (6a, 6b, 7a, 7b, 10, 11) sont conçus de manière à avoir une pupille d'entrée commune (2) et des fractions de faisceau du rayonnement optique, qui s'étalent à différents angles à partir d'un centre de la pupille d'entrée commune (2), respectivement butent perpendiculairement au premier axe de rotation sur le premier élément de déviation de faisceau (3) et perpendiculairement au deuxième axe de rotation sur le deuxième élément de déviation de faisceau (4),
- dans lequel les deux agencements optiques (6a, 6b, 7a, 7b, 10, 11) sont équipés avec des télescopes à relais cylindriques (6a, 6b, 7a, 7b), qui imagent la pupille d'entrée commune (2) sur l'élément déflecteur de faisceau respectif (3, 4), dans lequel l'axe du cylindre du télescope à relais cylindrique (6a, 6b) du premier agencement optique (6a, 6b, 10) est aligné parallèlement au premier axe de rotation et l'axe du cylindre du télescope à relais cylindrique (7a, 7b) du deuxième agencement optique (7a, 7b, 11) est aligné parallèlement au deuxième axe de rotation, et
- dans lequel le rayonnement est focalisé sur un plan cible (5) après avoir été dévié par les éléments de déviation de faisceau (3, 4) avec des optiques de focalisation cylindriques (10, 11), une première des optiques de focalisation cylindriques (10) est disposée entre le premier (3) et le deuxième élément de déviation de faisceau (4) et une deuxième des optiques de focalisation cylindriques (11) est disposée entre le deuxième élément de déviation de faisceau (4) et le plan cible (5), et l'axe du cylindre de la première optique de focalisation cylindrique (10) est aligné parallèlement au premier axe de rotation et l'axe du cylindre de la deuxième optique de focalisation cylindrique (11) est aligné parallèlement au deuxième axe de rotation.

7. Procédé selon la revendication 6,
**caractérisé en ce qu'**
un élément optique diffractif est disposé dans un plan de la pupille d'entrée commune (2) et un seul faisceau est dirigé sur l'élément optique diffractif de manière à buter sur l'élément optique diffractif au centre de la pupille d'entrée (2).

8. Procédé selon la revendication 6 ou 7,
**caractérisé en ce qu'**
un rayonnement individuel est divisé par un élément de division de rayonnement (13) en plusieurs rayonnements partiels (14) et les rayonnements partiels (14) sont guidés de telle sorte qu'ils passent sous différents angles à travers le centre de la pupille d'entrée commune (2).
